# EUROPEAN PATENT APPLICATION

(11) **EP 3 855 534 A1**
(43) Date of publication of application: **28.07.2021**
(21) Application number: 19862729.1
(22) Date of filing: 19.06.2019
(51) Int. Cl.: H01M 4/139, H01G 11/06, H01G 11/50, H01G 13/00, H01M 4/04

(54) **ELECTRODE-MANUFACTURING DEVICE**

(30) Priority: 19.09.2018 JP 2018175011
(71) Applicant: Musashi Energy Solutions Co., Ltd., Hokuto-shi, Yamanashi 409-1501 (JP)
(72) Inventor: AITA, Kazunari, Tokyo 105-8640 (JP); NAOI, Masaya, Tokyo 105-8640 (JP); IWAZAKI, Tomoya, Hokuto-shi, Yamanashi 409-1501 (JP); NANSAKA, Kenji, Hokuto-shi, Yamanashi 409-1501 (JP)
(74) Representative: TBK
(86) International application number: PCT/JP2019/024309
(87) International publication number: WO 2020/059225

(57) **Abstract**

An electrode manufacturing apparatus dopes an active material in a strip-shaped electrode precursor having a layer including the active material with alkali metal. The electrode manufacturing apparatus includes a doping bath configured to store a solution including alkali metal ions; a conveyor unit configured to convey the electrode precursor along a path passing through the doping bath; a counter electrode unit housed in the doping bath and comprising a conductive base material and an alkali metal-containing plate arranged on the conductive base material; and a connection unit configured to electrically connect the electrode precursor and the counter electrode unit. A distance between the alkali metal-containing plate and the electrode precursor becomes greater as a measurement position of the distance becomes closer to a connection position in which the electrode precursor and the connection unit connect each other.

## Description

### CROSS-REFERENCE TO RELATED APPLICATION

This international application claims the benefit of Japanese Patent Application No. 2018-175011 filed on September 19, 2018 with the Japan Patent Office, and the entire disclosure of Japanese Patent Application No. 2018-175011 is incorporated herein by reference.

### TECHNICAL FIELD

The present disclosure relates to an electrode manufacturing apparatus.

### BACKGROUND ART

In recent years, reduction in size and weight of electronic devices has been remarkable, and thus, there has been an increased demand for reduction in size and weight of batteries to be used as power supplies for driving such electronic devices.

In order to meet the demand for reduction in size and weight, nonacqeous electrolyte rechargeable batteries, as typified by lithium-ion rechargeable battery, have been developed. Also, lithium ion capacitors are known as power storage devices available for uses requiring high energy density characteristics and high output characteristics. Further known are sodium ion batteries and capacitors using sodium which is lower in cost and more abundant as a natural resource than lithium.

For these batteries and capacitors, a process of previously doping an electrode with alkali metal (generally referred to as pre-doping) is adopted for various purposes. Methods for pre-doping an electrode with alkali metal include, for example, a continuous method. In the continuous method, pre-doping is performed while transferring a strip-shaped electrode plate in an electrolyte solution. The continuous method is disclosed in Patent Documents 1 to 4.

### PRIOR ART DOCUMENTS

### PATENT DOCUMENTS

Patent Document 1: Japanese Unexamined Patent Application Publication No. H10-308212
Patent Document 2: Japanese Unexamined Patent Application Publication No. 2008-77963
Patent Document 3: Japanese Unexamined Patent Application Publication No. 2012-49543
Patent Document 4: Japanese Unexamined Patent Application Publication No. 2012-49544

### SUMMARY OF THE INVENTION

### PROBLEMS TO BE SOLVED BY THE INVENTION

An apparatus for performing pre-doping may be an electrode manufacturing apparatus described below. The electrode manufacturing apparatus comprises an alkali metal-containing plate that is arranged to face a strip-shaped electrode plate. The electrode manufacturing apparatus comprises a connector. The connector electrically connects a power supply and the strip-shaped electrode plate. The alkali metal-containing plate has a thickness that gradually decreases as pre-doping proceeds. If the thickness is equal to or less than a specified lower limit in a part of the alkali metal-containing plate, then the alkali metal-containing plate needs to be replaced.

The thickness of the alkali metal-containing plate decreases earlier as a position becomes closer to the connector. The reason is assumed to be that as the position becomes closer to the connector, an electrical resistance between the alkali metal-containing plate and the connector becomes lower, which facilitates current flow through alkali metal-containing plate.

Since the thickness of the alkali metal-containing plate decreases earlier as the position becomes closer to the connector, the thickness in a portion of the alkali metal-containing plate close to the connector may become equal to or less than the lower limit although the thickness in a portion distant from the connector is large, and then the alkali metal-containing plate needs to be replaced. As a result, the alkali metal-containing plate cannot be used efficiently.

In one aspect of the present disclosure, it is preferable to provide an electrode manufacturing apparatus that allows efficient use of an alkali metal-containing plate.

### MEANS FOR SOLVING THE PROBLEMS

One aspect of the present disclosure is an electrode manufacturing apparatus for doping an active material in a strip-shaped electrode precursor having a layer including the active material with alkali metal, and the apparatus comprises: a doping bath configured to store a solution comprising alkali metal ions; a conveyor unit configured to convey the electrode precursor along a path passing through the doping bath; a counter electrode unit housed in the doping bath and comprising a conductive base material and an alkali metal-containing plate arranged on the conductive base material; and a connection unit configured to electrically connect the electrode precursor and the counter electrode unit, wherein a distance between the alkali metal-containing plate and the electrode precursor becomes greater as a measurement position of the distance becomes closer to a connection position in which the electrode precursor and the connection unit connect each other.

In the electrode manufacturing apparatus as one aspect of the present disclosure, the distance between the alkali metal-containing plate and the electrode precursor becomes greater as the measurement position of the distance becomes closer to the connection position. Thus, a degree of decrease in the thickness of the alkali metal-containing plate does not vary greatly regardless of the position at the alkali metal-containing plate. As a result, the alkali metal-containing plate can be used efficiently.

Another aspect of the present disclosure is an electrode manufacturing apparatus for doping an active material in a strip-shaped electrode precursor having a layer including the active material with alkali metal, and the apparatus comprises: a doping bath configured to store a solution comprising alkali metal ions; a conveyor unit configured to convey the electrode precursor along a path passing through the doping bath; a counter electrode unit housed in the doping bath and comprising a conductive base material and an alkali metal-containing plate arranged on the conductive base material; and a connection unit configured to electrically connect the electrode precursor and the counter electrode unit, wherein a thickness of the alkali metal-containing plate becomes greater as a measurement position of the thickness becomes closer to a connection position in which the electrode precursor and the connection unit connect each other.

In the electrode manufacturing apparatus as another aspect of the present disclosure, the thickness of the alkali metal-containing plate becomes greater as the measurement position of the thickness becomes closer to the connection position in which the electrode precursor and the connection unit connect each other.

Thus, even in a case where the thickness of the alkali metal-containing plate decreases earlier as a position becomes closer to the connection position, a remaining thickness of the alkali metal-containing plate does not vary greatly regardless of the position in the alkali metal-containing plate. As a result, the alkali metal-containing plate can be used efficiently.

A further aspect of the present disclosure is an electrode manufacturing apparatus for doping an active material in a strip-shaped electrode precursor having a layer including the active material with alkali metal, and the apparatus comprises: a doping bath configured to store a solution comprising alkali metal ions; a conveyor unit configured to convey the electrode precursor along a path passing through the doping bath; a counter electrode unit housed in the doping bath and comprising a conductive base material and an alkali metal-containing plate arranged on the conductive base material; and a connection unit configured to electrically connect the electrode precursor and the counter electrode unit, wherein the conductive base material comprises holes in a surface thereof facing the alkali metal-containing plate.

In the electrode manufacturing apparatus as a further aspect of the present disclosure, the conductive base material comprises holes in the surface thereof facing the alkali metal-containing plate. Thus, an operation of separating the alkali metal-containing plate from the conductive base material is facilitated.

A yet another aspect of the present disclosure is an electrode manufacturing apparatus for doping an active material in a strip-shaped electrode precursor having a layer including the active material with alkali metal, and the apparatus comprises: a doping bath configured to store a solution comprising alkali metal ions; a conveyor unit configured to convey the electrode precursor along a path passing through the doping bath; a counter electrode unit housed in the doping bath; and a connection unit configured to electrically connect the electrode precursor and the counter electrode unit, wherein the counter electrode unit comprises a housing that houses a rod-shaped alkali metal-containing material and allows penetration of the solution.

In the electrode manufacturing apparatus as a yet another aspect of the present disclosure, the counter electrode unit comprises a housing that houses rod-shaped alkali metal-containing materials. When the rod-shaped alkali metal-containing materials in the housing decrease, it is possible to supply a new rod-shaped alkali metal-containing material into the housing. Thus, replenishing operation of the alkali metal-containing materials to the counter electrode unit is facilitated.

### BRIEF DESCRIPTION OF THE DRAWINGS

FIG. 1 is an explanatory view showing a configuration of an electrode manufacturing apparatus.
FIG. 2 is an explanatory view showing a state in which the electrolyte solution bath is moved downward.
FIG. 3 is an explanatory view showing an electrical configuration of the electrode manufacturing apparatus.
FIG. 4 is a side sectional view showing a configuration of a counter electrode unit.
FIG. 5 is a plan view showing a configuration of an electrode precursor. FIG. 6 is a sectional view taken along a VI-VI section of FIG. 5.
FIG. 7 is a side sectional view showing a configuration of a counter electrode unit.
FIG. 8 is a side sectional view showing a configuration of a counter electrode unit.
FIG. 9 is a side sectional view showing a configuration of a counter electrode unit.
FIG. 10 is a plan view showing a configuration of a metal foil.
FIG. 11 is an explanatory view showing a configuration of a counter electrode unit.

### EXPLANATION OF REFERENCE NUMERALS

1...electrode manufacturing apparatus; 7, 203, 205, 207...electrolyte solution bath; 9, 11, 13, 15, 17, 19, 21, 23, 25, 27, 29, 31, 305, 307, 109, 311, 313, 315, 317, 119, 321, 323, 33, 35, 37, 39, 41, 43, 45...conveyor roller; 47...supply roll 49...winding roll; 51, 52, 54...counter electrode unit; 53...porous insulation member; 55...support; 57...circulation filtration unit; 61, 62, 64...direct current power supply; 63...blower; 66...power supply control unit; 67, 68, 70...support rod; 69...partition plate; 71...space; 73...electrode precursor; 75...electrode; 77...conductive base material; 77B...main portion; 77C...metal foil; 79...alkali metal-containing plate , 81...filter; 83...pump; 85...pipe; 87, 89, 91, 94, 97, 99...cable; 93...current collector; 95...active material layer; 101...CPU; 103...cleaning bath; 105...memory; 107...hole; 111...housing , 113...alkali metal-containing material; 115...anode bag; 117...transmission-type sensor; 117A...light emitter; 117B...light receiver; 121...supply unit; 123...guide portion; 125...shutter; 127...opening

### MODE FOR CARRYING OUT THE INVENTION

Example embodiments of the present disclosure will be described with reference to the drawings.

### <First Embodiment>

### 1. Configuration of Electrode Manufacturing Apparatus 1

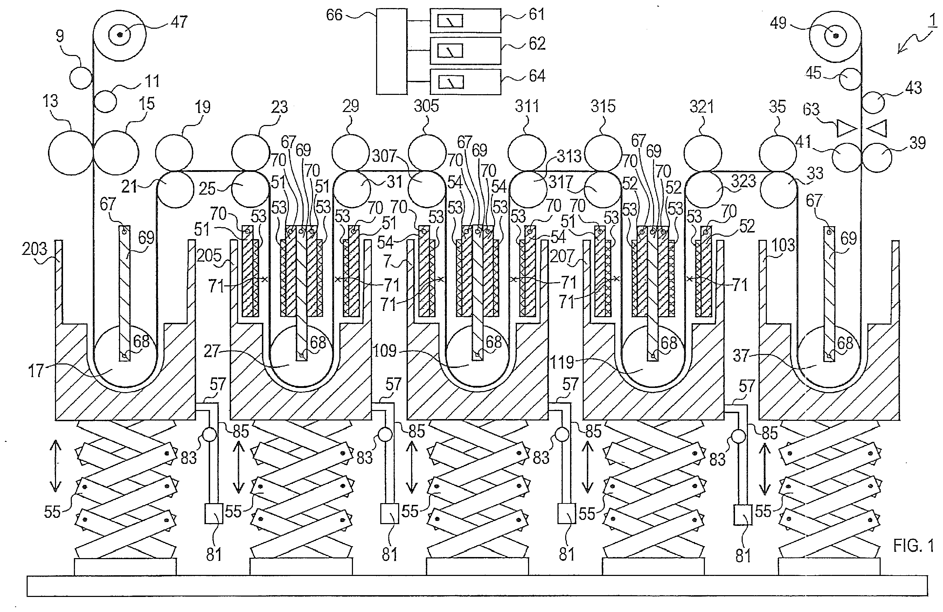

A description will be given of a configuration of an electrode manufacturing apparatus 1 with reference to FIG. 1 to FIG. 4. As shown in FIG. 1, the electrode manufacturing apparatus 1 comprises electrolyte solution baths 203, 205, 7, 207; a cleaning bath 103; conveyor rollers 9, 11, 13, 15, 17, 19, 21, 23, 25, 27, 29, 31, 305, 307, 109, 311, 313, 315, 317, 119, 321, 323, 33, 35, 37, 39, 41, 43, 45 (hereinafter also collectively referred to as a "conveyor roller group"); a supply roll 47; a winding roll 49; counter electrode units 51, 52, 54; porous insulation members 53; supports 55; circulation filtration units 57; three direct current power supplies 61, 62, 64; a blower 63; and a power supply control unit 66. The electrolyte solution baths 205, 7, 207 each correspond to a doping bath. The conveyor roller group corresponds to a conveyor unit.

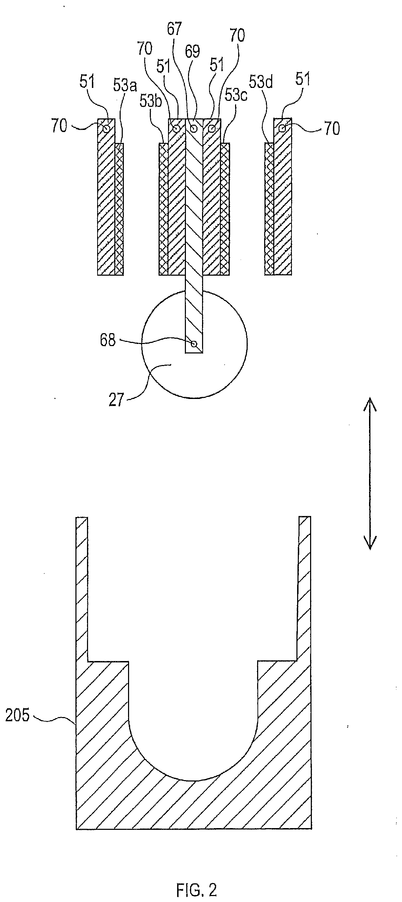

As shown in FIG. 1 and FIG. 2, the electrolyte solution bath 205 is a rectangular bath with an opened upper surface. The electrolyte solution bath 205 comprises a bottom surface having a generally U-shaped section. In the electrolyte solution bath 205, a partition plate 69, four counter electrode units 51, four porous insulation members 53, and a conveyor roller 27 are disposed. As shown in FIG. 2, the four porous insulation members 53 include 53a, 53b, 53c, and 53d.

The partition plate 69 is supported by a support rod 67 that penetrates an upper end of the partition plate 69. The support rod 67 is fixed to a not shown wall or the like. A part of the partition plate 69 other than the upper end is located in the electrolyte solution bath 205. The partition plate 69 extends vertically, and divides an inside of the electrolyte solution bath 205 into two spaces. The conveyor roller 27 is mounted to a lower end of the partition plate 69. The partition plate 69 and the conveyor roller 27 are penetrated and supported by a support rod 68. The partition plate 69 comprises a cutout in a vicinity of the lower end to avoid contact with the conveyor roller 27. There is a space between the conveyor roller 27 and a bottom surface of the electrolyte solution bath 205.

Each of the four counter electrode units 51 is supported by a support rod 70 penetrating an upper end of the counter electrode unit 51 and extends vertically. The support rod 70 is fixed to a not shown wall or the like. A part of the counter electrode unit 51 other than the upper end is located in the electrolyte solution bath 205. Two of the four counter electrode units 51 are arranged to hold the partition plate 69 from both sides thereof. The remaining two counter electrode units 51 are each arranged along an inner side surface of the electrolyte solution bath 205.

As shown in FIG. 1, there is a space 71 between the counter electrode unit 51 arranged on a side of the partition plate 69 and the counter electrode unit 51 arranged along the inner side surface of the electrolyte solution bath 205. The counter electrode unit 51 is connected to a positive electrode of the direct current power supply 61. The detailed configuration of the counter electrode unit 51 will be described later.

The porous insulation member 53 is attached to a surface of the counter electrode unit 51 on a space 71 side. The porous insulation member 53 has a plate shape. The porous insulation member 53 is attached to the surface of the counter electrode unit 51. The plate shape of the porous insulation member 53 is a shape when the porous insulation member 53 is attached to the surface of the counter electrode unit 51. The porous insulation member 53 may be a member that maintains a certain shape by itself or may be a member that is easily deformable, such as a net.

The porous insulation member 53 and an electrode precursor 73 conveyed by the conveyor roller group do not contact each other. A shortest distance d between a surface of the porous insulation member 53 and the electrode precursor 73 is preferably within a range of 0.5 to 100 mm, and particularly preferably within a range of 1 to 10 mm. The shortest distance d is a distance between a point on the surface of the porous insulation member 53 that is closest to the electrode precursor 73 and the electrode precursor 73.

The porous insulation member 53 is porous. Thus, a dope solution described later can pass through the porous insulation member 53. This allows the counter electrode unit 51 to contact the dope solution.

Examples of the porous insulation member 53 may include a mesh made of resin. Examples of the resin may include polyethylene, polypropylene, nylon, polyetheretherketone, and polytetrafluoroethylene. A mesh opening of the mesh, which may be appropriately specified, may be, for example, 0.1 µm to 10 mm, and preferably within a range of 0.1 to 5 mm. A thickness of the mesh, which may be appropriately specified, may be, for example, 1 µm to 10 mm, and preferably within a range of 30 µm to 1 mm. A mesh opening ratio of the mesh, which may be appropriately specified, may be, for example, 5 to 98%, and preferably within a range of 5 to 95%, and further preferably within a range of 50 to 95%.

The porous insulation member 53 may be entirely made of an insulating material or may partially comprise an insulating layer.

The electrolyte solution bath 203 has basically the same configuration as that of the electrolyte solution bath 205. The electrolyte solution bath 203, however, does not comprise the counter electrode unit 51 or the porous insulation member 53. Also, the electrolyte solution bath 203 comprises the conveyor roller 17 instead of the conveyor roller 27. The conveyor roller 17 is similar to the conveyor roller 27.

The electrolyte solution bath 7 has basically the same configuration as that of the electrolyte solution bath 205. The electrolyte solution bath 7, however, comprises four counter electrode units 54 and the conveyor roller 109 instead of the four counter electrode units 51 and the conveyor roller 27. The four counter electrode units 54 are similar to the four counter electrode units 51. The conveyor roller 109 is similar to the conveyor roller 27. The counter electrode units 54 are connected to a positive electrode of the direct current power supply 62.

The electrolyte solution bath 207 has a similar configuration to that of the electrolyte solution bath 205. The electrolyte solution bath 207, however, comprises four counter electrode units 52 and the conveyor roller 119 instead of the four counter electrode units 51 and the conveyor roller 27. The four counter electrode units 52 are similar to the four counter electrode units 51. The conveyor roller 119 is similar to the conveyor roller 27. The counter electrode units 52 are connected to a positive electrode of the direct current power supply 64.

The cleaning bath 103 has basically the same configuration as that of the electrolyte solution bath 205. The cleaning bath 103, however, does not comprise the counter electrode unit 51 or the porous insulation member 53. Also, the cleaning bath 103 comprises the conveyor roller 37 instead of the conveyor roller 27. The conveyor roller 37 is similar to the conveyor roller 27.

The conveyor rollers 25, 29, 307, 311, 317, 321 are made of an electrically conductive material. The remaining conveyor rollers in the conveyor roller group are each made of elastomer except for a bearing portion. The conveyor roller group conveys the electrode precursor 73 described later along a specified path. The path along which the conveyor roller group conveys the electrode precursor 73 is a path from the supply roll 47 to the winding roll 49 sequentially through the electrolyte solution bath 203, the electrolyte solution bath 205, the electrolyte solution bath 7, the electrolyte solution bath 207, and the cleaning bath 103.

A part of the path passing through the electrolyte solution bath 203 is a path that first moves downward between an inner side surface of the electrolyte solution bath 203 and the partition plate 69, then has its moving direction changed upward by the conveyor roller 17, and finally moves upward between the inner side surface of the electrolyte solution bath 203 and the partition plate 69 opposed thereto.

A part of the above-described path passing through the electrolyte solution bath 205 is a path that first moves downward in the space 71 between the porous insulation member 53 attached along the inner side surface of the electrolyte solution bath 205 and the opposing porous insulation member 53 on the partition plate 69 side, then has its moving direction changed upward by the conveyor roller 27, and finally moves upward in the space 71 between the porous insulation member 53 attached along the inner side surface of the electrolyte solution bath 205 and the opposing porous insulation member 53 on the partition plate 69 side.

A part of the above-described path passing through the electrolyte solution bath 7 is a path that first moves downward in the space 71 between the porous insulation member 53 attached along an inner side surface of the electrolyte solution bath 7 and the opposing porous insulation member 53 on the partition plate 69 side, then has its moving direction changed upward by the conveyor roller 109, and finally moves upward in the space 71 between the porous insulation member 53 attached along the inner side surface of the electrolyte solution bath 7 and the opposing porous insulation member 53 on the partition plate 69 side.

A part of the above-described path passing through the electrolyte solution bath 207 is a path that first moves downward in the space 71 between the porous insulation member 53 attached along an inner side surface of the electrolyte solution bath 207 and the opposing porous insulation member 53 on the partition plate 69 side, then has its moving direction changed upward by the conveyor roller 119, and finally moves upward in the space 71 between the porous insulation member 53 attached along the inner side surface of the electrolyte solution bath 207 and the opposing the porous insulation member 53 on the partition plate 69 side.

A part of the above-described path passing through the cleaning bath 103 is a path that first moves downward between an inner side surface of the cleaning bath 103 and the partition plate 69, then has its moving direction changed upward by the conveyor roller 37, and finally moves upward between the inner side surface of the cleaning bath 103 and the partition plate 69.

The electrode precursor 73 is wound around an outer circumference of the supply roll 47. Specifically, the supply roll 47 holds the electrode precursor 73 in a wound-up state. The conveyor roller group draws out the electrode precursor 73 held by the supply roll 47 and conveys the same.

The winding roll 49 winds up and stores an electrode 75 that is conveyed by the conveyor roller group. The electrode 75 is produced by pre-doping of the electrode precursor 73 with alkali metal in the electrolyte solution baths 205, 7, and 207. The electrode 75 corresponds to a doped electrode.

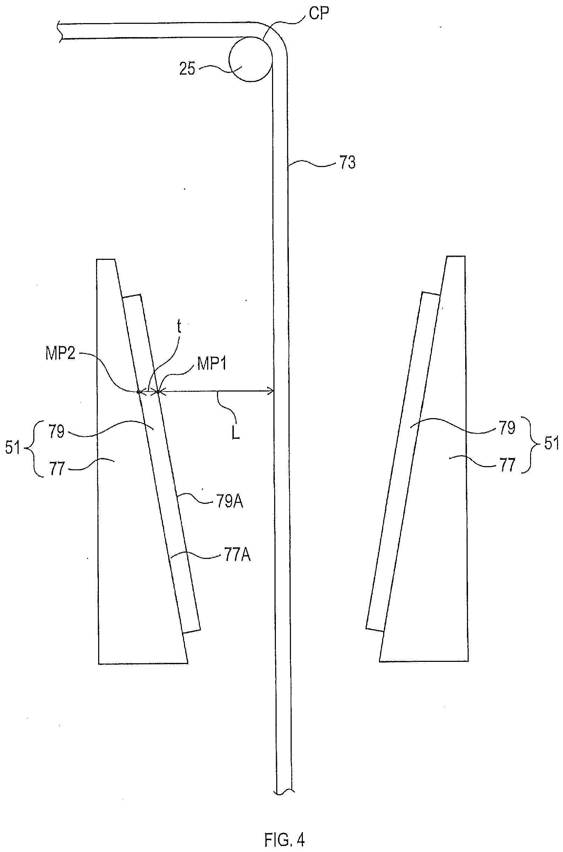

A configuration of the counter electrode unit 51 will be described based on FIG. 4. The two counter electrode units 51 shown in FIG. 4 are the two counter electrode units 51 located on a left side of the partition plate 69 in FIG. 1. In FIG. 4, illustration of the porous insulation member 53 is omitted for description purposes. Actually, the porous insulation member 53 is provided on an alkali metal-containing plate 79 described later.

The counter electrode unit 51 has a plate shape. The counter electrode unit 51 has a layered configuration of a conductive base material 77 and the alkali metal-containing plate 79. The alkali metal-containing plate 79 is arranged on the conductive base material 77.

Examples of a material for the conductive base material 77 may include copper, stainless steel, and nickel. The alkali metal-containing plate 79 is not limited to a specific form, and may be, for example, an alkali metal plate, and an alkali metal alloy plate. The alkali metal-containing plate 79 may have a thickness of, for example, 0.03 to 3 mm.

A position in which the electrode precursor 73 and the conveyor roller 25 electrically connect each other is referred to as a "connection position CP". As described later, the conveyor roller 25 is a part of a connection unit. The connection position CP corresponds to a connection position in which the electrode precursor 73 and the connection unit connect each other. The connection position CP is located above the counter electrode unit 51.

A surface of the conductive base material 77 on a side of the alkali metal-containing plate 79 is represented by 77A. A surface of the alkali metal-containing plate 79 facing the electrode precursor 73 is represented by 79A. An optional position on the surface 79A is referred to as a "measurement position MP1". A distance between the alkali metal-containing plate 79 and the electrode precursor 73 at the measurement position MP1 is represented by L. A thickness of the alkali metal-containing plate 79 at the measurement position MP1 is represented by t.

The thickness t is constant regardless of the measurement position MP1. The distance L becomes greater as the measurement position MP1 becomes closer to the connection position CP. An optional position on the surface 77A is referred to as a "measurement position MP2". A thickness of the conductive base material 77 at the measurement position MP2 becomes smaller as the measurement position MP2 becomes closer to the connection position CP. Thus, a distance between the measurement position MP2 and the electrode precursor 73 becomes greater as the measurement position MP2 becomes closer to the connection position CP.

The two counter electrode units 51 located on a right side of the partition plate 69 in FIG. 1 also have a similar configuration as described above. In the case of the two counter electrode units 51 located on the right side of the partition plate 69, a position in which the electrode precursor 73 and the conveyor roller 29 electrically connect each other is referred to as the connection position CP.

The two counter electrode units 54 located on a left side of the partition plate 69 in FIG. 1 also have a similar configuration as described above. In the case of the two counter electrode units 54 located on the left side of the partition plate 69, a position in which the electrode precursor 73 and the conveyor roller 307 electrically connect each other is referred to as the connection position CP.

The two counter electrode units 54 located on a right side of the partition plate 69 in FIG. 1 also have a similar configuration as described above. In the case of the two counter electrode units 54 located on the right side of the partition plate 69, a position in which the electrode precursor 73 and the conveyor roller 311 electrically connect each other is referred to as the connection position CP.

The two counter electrode units 52 located on a left side of the partition plate 69 in FIG. 1 also have a similar configuration as described above. In the case of the two counter electrode units 52 located on the left side of the partition plate 69, a position in which the electrode precursor 73 and the conveyor roller 317 electrically connect each other is referred to as the connection position CP.

The two counter electrode units 52 located on a right side of the partition plate 69 in FIG. 1 also have a similar configuration as described above. In the case of the two counter electrode units 52 located on the right side of the partition plate 69, a position in which the electrode precursor 73 and the conveyor roller 321 electrically connect each other is referred to as the connection position CP.

The supports 55 support the electrolyte solution baths 203, 205, 7, 207 and the cleaning bath 103 from below. The supports 55 are changeable in height. When the support 55 supporting the electrolyte solution bath 205 is lowered while maintaining positions in a vertical direction of the partition plate 69, the counter electrode units 51, and the porous insulation members 53, the electrolyte solution bath 205 can be moved relatively downward with respect to the partition plate 69, the counter electrode units 51, and the porous insulation members 53, as shown in FIG. 2. When the support 55 is raised, the electrolyte solution bath 205 can be moved relatively upward with respect to the partition plate 69, the counter electrode units 51, and the porous insulation members 53. The supports 55 each supporting the electrolyte solution baths 203, 7, 207 and the cleaning bath 103 have a similar function.

The circulation filtration unit 57 is provided to each of the electrolyte solution baths 203, 205, 7, 207. The circulation filtration unit 57 comprises a filter 81, a pump 83, and a pipe 85.

In the circulation filtration unit 57 provided to the electrolyte solution bath 203, the pipe 85 is a circulation pipe that extends from the electrolyte solution bath 203, sequentially passes through the pump 83 and the filter 81, and then returns to the electrolyte solution bath 203. The dope solution in the electrolyte solution bath 203 is circulated through the pipe 85 and the filter 81 by a driving force of the pump 83, and is returned to the electrolyte solution bath 203. During this period, foreign matter and the like in the dope solution is filtered by the filter 81. Examples of the foreign matter may include foreign matter precipitated from the dope solution and foreign matter generated from the electrode precursor 73. Examples of a material for the filter 81 may include resin, such as polypropylene and polytetrafluoroethylene. A pore size of the filter 81, which may be appropriately specified, may be, for example, 30 to 50 µm.

The circulation filtration units 57 provided to the electrolyte solution baths 205, 7, 207 each also have a similar configuration and a similar operation effect. In FIG. 1 and FIG. 2, illustration of the dope solution is omitted for the purpose of convenience.

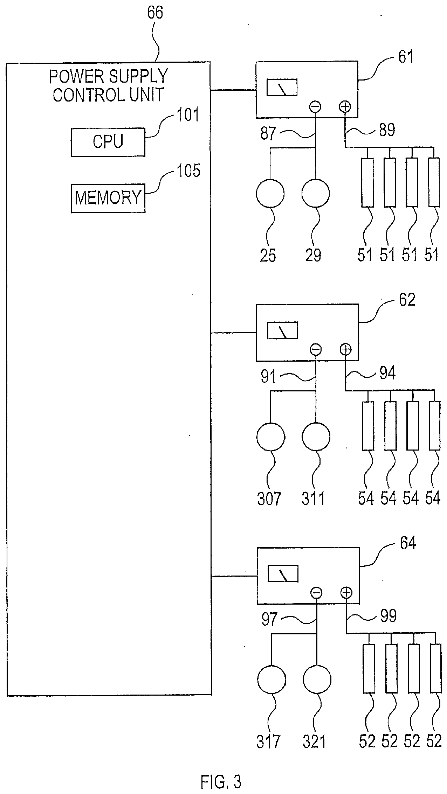

As shown in FIG. 3, a negative terminal of the direct current power supply 61 is connected to each of the conveyor rollers 25 and 29 through a cable 87. Also, a positive terminal of the direct current power supply 61 is connected to each of the total four counter electrode units 51 through a cable 89. The electrode precursor 73 contacts the conveyor rollers 25 and 29 that are electrically conductive. The electrode precursor 73 and the counter electrode units 51 are located in the dope solution that is an electrolyte solution. Thus, the electrode precursor 73 and the counter electrode units 51 electrically connect each other.

The cables 87 and 89, and the conveyor rollers 25 and 29 correspond to the connection unit. The direct current power supply 61 supplies current to the counter electrode units 51 through the cables 87 and 89, and the conveyor rollers 25 and 29.

As shown in FIG. 3, a negative terminal of the direct current power supply 62 is connected to each of the conveyor rollers 307 and 311 through a cable 91. Also, a positive terminal of the direct current power supply 62 is connected to each of the total four counter electrode units 54 through a cable 94. The electrode precursor 73 contacts the conveyor rollers 307 and 311 that are electrically conductive. The electrode precursor 73 and the counter electrode units 54 are located in the dope solution that is an electrolyte solution. Thus, the electrode precursor 73 and the counter electrode units 54 electrically connect each other.

The cables 91 and 94, and the conveyor rollers 307 and 311 correspond to the connection unit. The direct current power supply 62 supplies current to the counter electrode units 54 through the cables 91 and 94, and the conveyor rollers 307 and 311.

As shown in FIG. 3, a negative terminal of the direct current power supply 64 is connected to each of the conveyor rollers 317 and 321 through a cable 97. Also, a positive terminal of the direct current power supply 64 is connected to each of the total four counter electrode units 52 through a cable 99. The electrode precursor 73 contacts the conveyor roller 317 and 321 that are electrically conductive. The electrode precursor 73 and the counter electrode units 52 are located in the dope solution that is an electrolyte solution. Thus, the electrode precursor 73 and the counter electrode units 52 electrically connect each other.

The cables 97 and 99, and the conveyor rollers 317 and 321 correspond to the connection unit. The direct current power supply 64 supplies current to the counter electrode units 52 through the cables 97 and 99, and the conveyor roller 317 and 321.

As shown in FIG. 1, the blower 63 blows gas to the electrode 75 that comes out of the cleaning bath 103 to vaporize a cleaning fluid, thereby to dry the electrode 75. The gas to be used is preferably a gas inactive to an active material that is pre-doped with alkali metal. Examples of such gas may include helium gas, neon gas, argon gas, and dehumidified air after removing humidity.

As shown in FIG. 3, the power supply control unit 66 is electrically connected to the direct current power supplies 61, 62, 64. The power supply control unit 66 is a microcomputer that comprises a CPU 101 and a semiconductor memory (hereinafter, a memory 105), such as a RAM or a ROM.

### 2. Configuration of Electrode Precursor 73

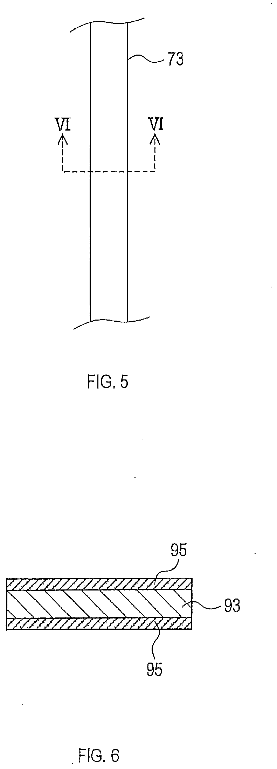

A description will be given of a configuration of the electrode precursor 73 based on FIG. 5 and FIG. 6. As shown in FIG. 5, the electrode precursor 73 has a strip-shaped configuration. As shown in FIG. 6, the electrode precursor 73 comprises a strip-shaped current collector 93 and active material layers 95 formed on both sides of the strip-shaped current collector 93.

The current collector 93 is preferably a metal foil of, for example, copper, nickel, and stainless steel. Alternatively, the current collector 93 may comprise the metal foil and a conductive layer comprising a carbon material as a main component and formed on the metal foil. The current collector 93 may have a thickness of, for example, 5 to 50 µm.

The active material layers 95 may be formed, for example, by preparing a slurry comprising an active material before doping of alkali metal and a binder, applying the slurry on the current collector 93, and drying the slurry.

Examples of the binder may include rubber-based binders, such as styrenebutadiene rubber (SBR) and NBR; fluorine resins, such as polytetrafluoroethylene and polyvinylidene fluoride; polypropylene, polyethylene, fluorine-modified (meth) acrylic binder as disclosed in Japanese Unexamined Patent Application Publication No. 2009-246137.

The slurry may comprise other components in addition to the active material and the binder. Examples of such other components may include conductive agents, such as carbon black, graphite, vapor-grown carbon fiber, and metal powder; thickeners, such as carboxyl methyl cellulose, a Na salt or an ammonium salt thereof, methyl cellulose, hydroxymethyl cellulose, ethyl cellulose, hydroxypropyl cellulose, polyvinyl alcohol, oxidized starch, phophorylated starch, and casein.

A thickness of the active material layer 95 is not particularly limited, and may be, for example, 5 to 500 µm, preferably 10 to 200 µm, and particularly preferably 10 to 100 µm.

The active material included in the active material layer 95 is not particularly limited, as long as the material is an electrode active material applicable to batteries or capacitors utilizing insertion/desorption of alkali metal ions, and may be a negative electrode active material or a positive electrode active material.

The negative electrode active material is not particularly limited, and examples thereof may include a carbon material, such as graphite, easily-graphitizable carbon, hardly-graphitizable carbon, and a composite carbon material obtained by coating graphite particles with a pitch or a resin carbide; and a material comprising a metal or semi-metal, such as Si and Sn, that can be alloyed with lithium, or an oxide thereof. Specific examples of the carbon material may include a carbon material described in Japanese Unexamined Patent Application Publication No. 2013-258392. Specific examples of the material comprising a metal or semi-metal, such as Si and Sn, that can be alloyed with lithium, or an oxide thereof may include the materials described in Japanese Unexamined Patent Application Publication No. 2005-123175 and Japanese Unexamined Patent Application Publication No. 2006-107795.

Examples of the positive electrode active material may include transition metal oxides, such as cobalt oxide, nickel oxide, manganese oxide, and vanadium oxide; and sulfur-based active materials, such as simple sulfur substance and metal sulfide.

Any of the positive electrode active material and the negative electrode active material may be made of a single substance or a mixture of two or more types of substances. The electrode manufacturing apparatus 1 of the present disclosure is suitable for pre-doping the negative electrode active material with an alkali metal, and particularly, the negative electrode active material is preferably a carbon material or a material comprising Si or an oxide thereof.

The alkali metal to be pre-doped to the active material is preferably lithium or sodium, and particularly preferably lithium. In the case of using the electrode precursor 73 for manufacturing an electrode of a lithium-ion rechargeable battery, a density of the active material layer 95 is preferably 1.50 to 2.00 g/cc, and particularly preferably 1.60 to 1.90 g/cc.

### 3. Composition of Dope Solution

When the electrode manufacturing apparatus 1 is used, a solution comprising alkali metal ions (hereinafter referred to as a "dope solution") is stored in the electrolyte solution baths 203, 205, 7, 207.

The dope solution comprises alkali metal ions and a solvent. Examples of the solvent may include an organic solvent. The organic solvent is preferably an aprotic organic solvent. Examples of the aprotic organic solvent may include ethylene carbonate, propylene carbonate, butylene carbonate, dimethyl carbonate, diethyl carbonate, methyl ethyl carbonate, 1-fluoroethylene carbonate, γ-butyrolactone, acetonitrile, dimethoxyethane, tetrahydrofuran, dioxolane, methylene chloride, sulfolane, diethylene glycol dimethyl ether (diglyme), diethylene glycol methyl ethyl ether, triethylene glycol dimethyl ether (triglyme), triethylene glycol butyl methyl ether, and tetraethylene glycol dimethyl ether (tetraglyme).

Also, as the organic solvent, ionic liquids of a quaternary imidazolium salt, quaternary pyridinium salt, quaternary pyrrolidinium salt, quaternary piperidinium salt, and the like, may be used. The organic solvent may be made of a single component, or may be a mixed solvent of two or more types of components. The organic solvent may be made of a single component, or may be a mixed solvent of two or more types of components.

The alkali metal ions included in the dope solution are ions forming an alkali metal salt. The alkali metal salt is preferably a lithium salt or a sodium salt. Examples of an anionic moiety forming the alkali metal salt may include phosphorus anion having a fluoro group, such as PF6⁻, PF₃(C₂F₅)₃⁻, and PF3(CF₃)3⁻; boron anion having a fluoro group or a cyano group, such as BF₄⁻, BF₂(CF)₂⁻, BF₃(CF₃)⁻, and B(CN)₄⁻; sulfonyl imide anion having a fluoro group, such as N(FSO₂)₂⁻, N(CF₃SO₂)₂⁻, and N(C₂F₅SO₂)₂⁻; and organic sulfonic acid anion having a fluoro group, such as CF₃SO3⁻.

A concentration of the alkali metal salt in the dope solution is preferably 0.1 mol/L or more, and more preferably within a range of 0.5 to 1.5 mol/L. Within this range, pre-doping of alkali metal proceeds efficiently.

The dope solution may further comprise additives, such as vinylene carbonate, vinyl ethylene carbonate, 1-fluoroethylene carbonate, 1-(trifluoromethyl) ethylene carbonate, succinic anhydride, maleic anhydride, propane sultone, and diethyl sulfone.

The dope solution may further comprise a flame retardant, such as a phosphazene compound. From the viewpoint of effective control of a thermal runaway reaction while doping the alkali metal, a lower limit of an added amount of the flame retardant is preferably 1 part by mass or more, more preferably 3 parts by mass or more, and further preferably 5 parts by mass or more, with respect to 100 parts by mass of the dope solution. From the viewpoint of obtaining a high-quality doped electrode, an upper limit of the added amount of the flame retardant is preferably 20 parts by mass or less, more preferably 15 parts by mass or less, and further preferably 10 parts by mass or less, with respect to 100 parts by mass of the dope solution.

4. Manufacturing Method of Electrode 75 Using Electrode Manufacturing Apparatus 1

First, as a preparation for manufacturing the electrode 75, the following is performed. The electrode precursor 73 is wound around the supply roll 47. Subsequently, the electrode precursor 73 is drawn out from the supply roll 47 by the conveyor roller group, and is fed to the winding roll 49 along the above-described path. Then, the electrolyte solution baths 203, 205, 7, 207, and the cleaning bath 103 are raised and set at specified positions shown in FIG. 1. The dope solution is stored in the electrolyte solution baths 203, 205, 7, 207. The dope solution is as described in "3. Composition of Dope Solution". The cleaning fluid is stored in the cleaning bath 103. The cleaning fluid is an organic solvent. As a result, the spaces 71 in the electrolyte solution baths 203, 205, 7, 207 are filled with the electrolyte solution. The space 71 in the cleaning bath 103 is filled with the cleaning fluid.

Next, the electrode precursor 73 fed from the supply roll 47 to the winding roll 49 is drawn out from the supply roll 47 toward the winding roll 49 and conveyed along the above-described path by the conveyor roller group. When the electrode precursor 73 passes through the electrolyte solution baths 205, 7, 207 in a state where the direct current power supplies 61, 62, 64 are on, the active material included in the active material layer 95 is pre-doped with alkali metal.

As a result of pre-doping of the active material with the alkali metal, the electrode precursor 73 becomes the electrode 75. The electrode 75 is cleaned in the cleaning bath 103 while being conveyed by the conveyor roller group. Finally, the electrode 75 is wound around the winding roll 49.

The electrode 75 manufactured using the electrode manufacturing apparatus 1 may be a positive electrode or a negative electrode. In the case of manufacturing a positive electrode, the electrode manufacturing apparatus 1 dopes a positive electrode active material with alkali metal, and in the case of manufacturing a negative electrode, the electrode manufacturing apparatus 1 dopes a negative electrode active material with alkali metal.

When lithium is occluded in a negative electrode active material of a lithium ion capacitor, a doping amount of alkali metal is preferably 70 to 95% with respect to a theoretical capacity of the negative electrode active material; and when lithium is occluded in a negative electrode active material of a lithium-ion rechargeable battery, the doping amount is preferably 10 to 30% with respect to the theoretical capacity of the negative electrode active material.

### 6. Effects Achieved by Electrode Manufacturing Apparatus 1

(1A) If the distance L is constant regardless of the measurement position MP1, then an electrical resistance (hereinafter referred to as an "MP1 resistance") between the alkali metal-containing plate 79 and the conveyor roller 25 at the measurement position MP1 becomes smaller as the measurement position MP1 becomes closer to the connection position CP. At the counter electrode units 51, 54, 52, the distance L becomes greater as the measurement position MP1 becomes closer to the connection position CP. Thus, the MP1 resistance does not vary greatly regardless of the measurement position MP1. Accordingly, a degree of decrease in the thickness t does not vary greatly regardless of the measurement position MP1. As a result, the alkali metal-containing plate 79 can be used efficiently.
(1B) The connection position CP is a position in which the electrode precursor 73 connects the conveyor rollers 25, 29, 307, 311, 317, 321 that are electrically conductive. Thus, a secure electrical connection can be established between the electrode precursor 73 and the counter electrode units 51, 54, 52.
(1C) The electrode manufacturing apparatus 1 comprises a plurality of the alkali metal-containing plates 79. Two of the alkali metal-containing plates 79 are arranged to face each other with the electrode precursor 73 located therebetween. Thus, pre-doping can be performed efficiently.

### <Second Embodiment >

### 1. Difference from First Embodiment

Since a second embodiment has a basic configuration similar to that of the first embodiment, differences therebetween will be described below. It is to be noted that the same reference numerals as those in the first embodiment indicate the same configurations, and reference is made to the preceding description.

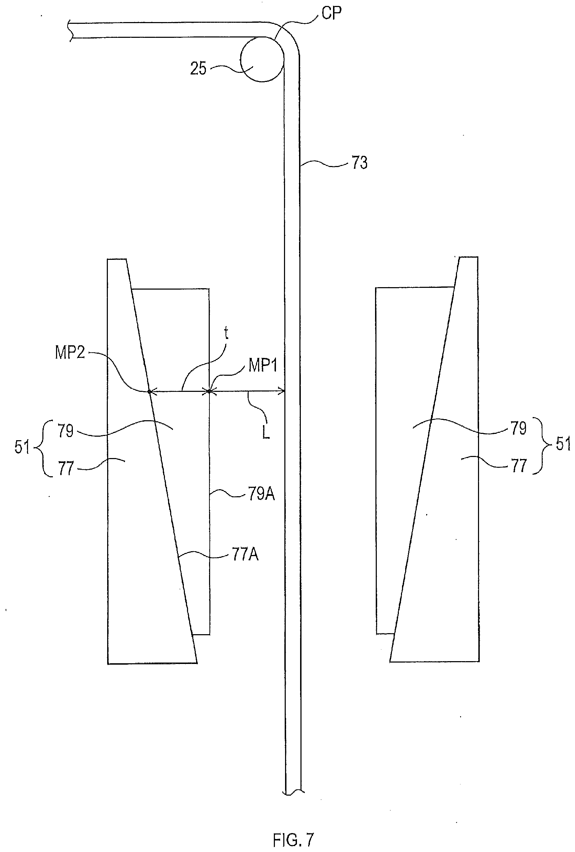

In the first embodiment described above, the thickness t is constant regardless of the measurement position MP1, and the distance L becomes greater as the measurement position MP1 becomes closer to the connection position CP. In contrast, in the second embodiment as shown in FIG. 7, the thickness t becomes greater as the measurement position MP1 becomes closer to the connection position CP. Also, the distance L is constant regardless of the measurement position MP1. The distance between the measurement position MP2 and the electrode precursor 73 becomes greater as the measurement position MP2 becomes closer to the connection position CP.

The alkali metal-containing plate 79 having the thickness t varying depending on the measurement position MP1 may be manufactured, for example, by a method below. A guide defining the thickness t is attached to each side of the alkali metal-containing plate 79 in its width direction, and the alkali metal-containing plate 79 is manufactured by roll pressing. In this case, the guide has a height that increases along a longitudinal direction of the alkali metal-containing plate 79.

### 2. Effects Achieved by Electrode Manufacturing Apparatus 1

According to the second embodiment detailed above, the aforementioned effects (1B) and (1C) of the first embodiment as well as the following effects are achieved.

(2A) Since the distance L is constant regardless of the measurement position MP1, the MP1 resistance becomes smaller as the measurement position MP1 becomes closer to the connection position CP. Thus, the degree of decrease in the thickness t becomes greater as the measurement position MP1 become closer to the connection position CP. Initially, the thickness t becomes greater as the measurement position MP1 becomes closer to the connection position CP. Accordingly, when the thickness t decreases, the remaining thickness t does not vary greatly regardless of the measurement position MP1. As a result, the alkali metal-containing plate 79 can be used efficiently.

### <Third Embodiment>

### 1. Differences from First Embodiment

Since a third embodiment has a basic configuration similar to that of the first embodiment, differences therebetween will be described below. It is to be noted that the same reference numerals as those in the first embodiment indicate the same configurations, and reference is made to the preceding description.

In the first embodiment described above, the thickness t is constant regardless of the measurement position MP1, and the distance between the measurement position MP2 and the electrode precursor 73 becomes greater as the measurement position MP2 becomes closer to the connection position CP.

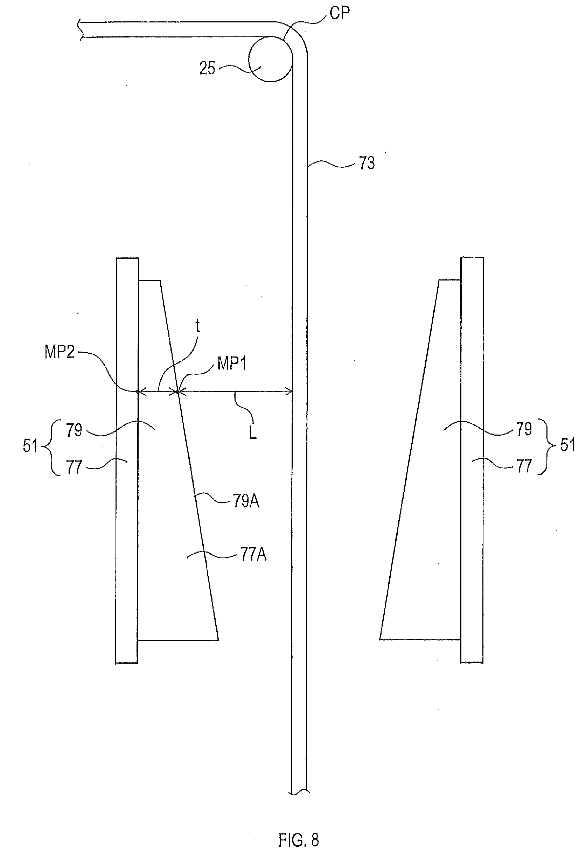

In contrast, in the second embodiment as shown in FIG. 8, the thickness t become smaller as the measurement position MP1 becomes closer to the connection position CP. Also, the distance L becomes greater as the measurement position MP1 becomes closer to the connection position CP. The distance between the measurement position MP2 and the electrode precursor 73 is constant regardless of the measurement position MP2.

The alkali metal-containing plate 79 having the thickness t varying depending on the position may be manufactured by the same method as in the second embodiment.

### 2. Effects Achieved by Electrode Manufacturing Apparatus 1

According to the third embodiment detailed above, the aforementioned effects of the first embodiment are achieved.

### <Fourth Embodiment>

### 1. Differences from First Embodiment

Since a fourth embodiment has a basic configuration similar to that of the first embodiment, differences therebetween will be described below. It is to be noted that the same reference numerals as those in the first embodiment indicate the same configurations, and reference is made to the preceding description.

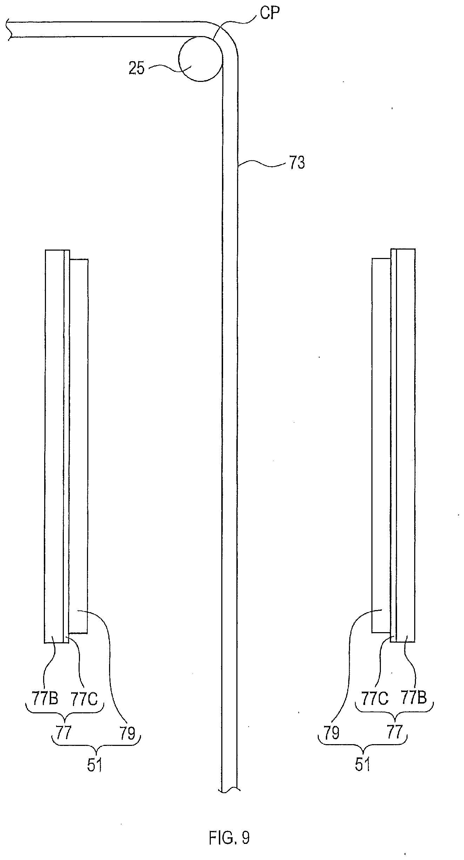

FIG. 9 shows the two counter electrode units 51 located on the left side of the partition plate 69 in FIG. 1. The other counter electrode units 51, the counter electrode units 54, and the counter electrode units 52 also have a similar configuration as the counter electrode units 51 shown in FIG. 9.

As shown in FIG. 9, the conductive base material 77 comprises a main portion 77B and a metal foil 77C. The main portion 77B is a plate-shaped member made of metal. The main portion 77B has, for example, no hole. Examples of a material for the main portion 77B may include copper, stainless steel, and nickel.

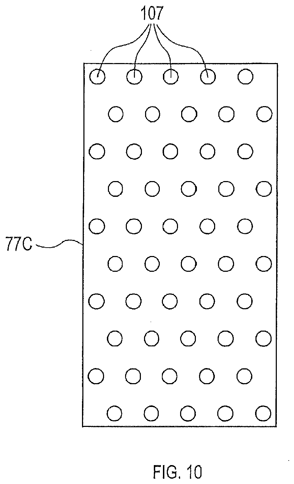

The metal foil 77C forms a surface of the conductive base material 77 to face the alkali metal-containing plate 79. The metal foil 77C is located between the main portion 77B and the alkali metal-containing plate 79. The alkali metal-containing plate 79 is attached to the metal foil 77C. The metal foil 77C is a thin film made of metal. Examples of a material for the metal foil 77C may include copper, stainless steel, and nickel. As shown in FIG. 10, the metal foil 77C comprises holes 107. The holes 107 are distributed over the entire metal foil 77C. The holes 107 each penetrate the metal foil 77C in its thickness direction.

An aperture ratio of the metal foil 77C is preferably 0.1% or more and 50% or less, and more preferably 1% or more and 20% or less. When the aperture ratio of the metal foil 77C is within the above range, an operation of separating the alkali metal-containing plate 79 from the conductive base material 77 is further facilitated. The aperture ratio is a ratio of an area of the holes 107 relative to an area of the metal foil 77C when assuming that there is no hole 107.

A diameter of the hole 107 is preferably 0.01 mm or more and 10 mm or less, and more preferably 0.1 mm or more and 3 mm or less. When the diameter of the hole 107 is within the above range, the operation of separating the alkali metal-containing plate 79 from the conductive base material 77 is further facilitated.

A pitch between the holes 107 is preferably 0.01 mm or more and 10 mm or less, and more preferably 0.1 mm or more and 5 mm or less. When the pitch between the holes 107 is within the above range, the operation of separating the alkali metal-containing plate 79 from the conductive base material 77 is further facilitated.

The distance L between the alkali metal-containing plate 79 and the electrode precursor 73 may vary, for example, depending on the measurement position MP1 similarly to the first embodiment, or may be constant regardless of the measurement position MP1. The thickness t of the alkali metal-containing plate 79 may vary, for example, depending on the measurement position MP1 similarly to the second embodiment, or may be constant regardless of the measurement position MP1.

### 2. Effects Achieved by Electrode Manufacturing Apparatus 1

According to the fourth embodiment detailed above, the operation of separating the alkali metal-containing plate 79 from the conductive base material 77 is easy. Thus, the alkali metal-containing plate 79 can be replaced easily.

### <Fifth Embodiment>

### 1. Differences from First Embodiment

Since a fifth embodiment has a basic configuration similar to that of the first embodiment, differences therebetween will be described below. It is to be noted that the same reference numerals as those in the first embodiment indicate the same configurations, and reference is made to the preceding description.

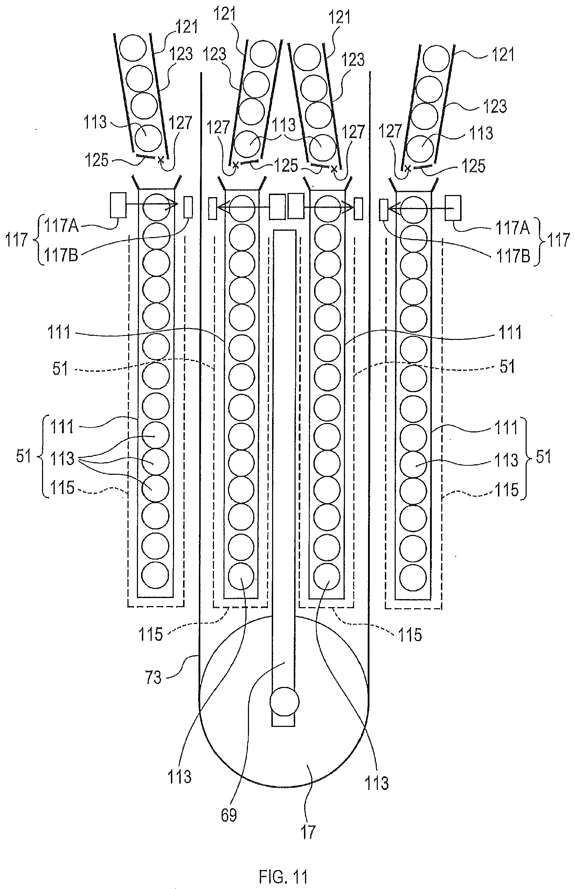

FIG. 11 shows the counter electrode units 51 in the fifth embodiment. It is to be noted that the counter electrode units 54 and 52 in the fifth embodiment each also have a similar configuration as that of the counter electrode units 51 shown in FIG. 11.

The counter electrode unit 51 comprises a housing 111, rod-shaped alkali metal-containing materials 113, and an anode bag 115.

The housing 111 is a hollow box-shaped member. The housing 111 is open at its top. The housing 111 is formed of a titanium plate with holes. Thus, the housing 111 is an electrically conductive member. Also, the housing 111 allows penetration of the electrolyte solution. Specifically, the electrolyte solution can pass between inside and outside of the housing 111.

The alkali metal-containing material 113 has a similar composition as that of the alkali metal-containing plate 79 in the first embodiment. However, the alkali metal-containing material 113 has a rod-shaped configuration. The alkali metal-containing materials 113 are housed in the housing 111. The alkali metal-containing material 113 has an axial direction that is parallel to a width direction of the electrode precursor 73. The alkali metal-containing materials 113 are stacked vertically in line inside the housing 111. The uppermost one of the alkali metal-containing materials 113 is located in a vicinity of an upper end of the housing 111.

The cable 89 is connected to the housing 111. The alkali metal-containing material 113 contacts an inner surface of the housing 111. Thus, the alkali metal-containing material 113 is electrically connected to the cable 89 through the housing 111.

The anode bag 115 covers an outside of the housing 111. Examples of a material for the anode bag 115 may include a mesh with fine holes made of resin. Examples of the resin may include polyethylene, polypropylene, nylon, polyetheretherketone, and polytetrafluoroethylene. A mesh opening of the fine holes may be appropriately specified, and may be, for example, 0.1 µm to 10 mm. The mesh opening of the fine holes is preferably within a range of 0.1 to 5 mm.

A thickness of the mesh may be appropriately specified, and may be, for example, 1 µm to 10 mm. The thickness of the mesh is preferably within a range of 30 µm to 1 mm. A mesh opening ratio of the fine holes may be appropriately specified, and may be, for example, 5 to 98%. The mesh opening ratio of the fine holes is preferably 5 to 95%, and more preferably 50 to 95%. Since the anode bag 115 comprises fine holes, the electrolyte solution can pass through the anode bag 115. The holes provided in the anode bag 115 are smaller than the holes provided in the housing 111.

The electrode manufacturing apparatus 1 further comprises transmission-type sensors 117. The transmission-type sensor 117 is provided to each of the counter electrode units 51. The transmission-type sensor 117 is provided in the vicinity of the upper end of the housing 111. The transmission-type sensor 117 is positioned above a liquid level of the electrolyte solution. The transmission-type sensor 117 comprises a light emitter 117A and a light receiver 117B. The light emitter 117A and the light receiver 117B are arranged with the housing 111 located therebetween.

The light emitter 117A emits light toward the light receiver 117B. If the alkali metal-containing material 113 is present in the vicinity of the upper end of the housing 111, then the alkali metal-containing material 113 blocks the light, and the light receiver 117B does not receive the light. If the alkali metal-containing material 113 is absent in the vicinity of the upper end of the housing 111, then the alkali metal-containing material 113 does not block the light, and the light receiver 117B receives the light. Accordingly, the transmission-type sensor 117 can detect whether or not the alkali metal-containing material 113 is present in the vicinity of the upper end of the housing 111 based on a light reception status of the light receiver 117B.

The electrode manufacturing apparatus 1 further comprises supply units 121. The supply unit 121 is provided to each of the counter electrode units 51. The supply unit 121 is provided above the counter electrode unit 51. The supply unit 121 is positioned above the liquid level of the electrolyte solution. The supply unit 121 comprises a guide portion 123 and a shutter 125. The guide portion 123 is a tubular member having a lower portion with an opening 127. The alkali metal-containing materials 113 are housed in the guide portion 123.

The shutter 125 is movable between a position to close the opening 127 and a position to open the opening 12. While the shutter 125 closes the opening 127, the alkali metal-containing materials 113 in the guide portion 123 do not fall. While the shutter 125 opens the opening 127, the alkali metal-containing materials 113 in the guide portion 123 fall downward from the opening 127, and are supplied into the housing 111 of the corresponding counter electrode unit 51.

### 2. Processes Performed by Electrode Manufacturing Apparatus 1

The electrode manufacturing apparatus 1 performs further processes described below in addition to processes in the first embodiment. The electrode manufacturing apparatus 1 determines, at specified intervals, whether or not the alkali metal-containing material 113 is present in the vicinity of the upper end of the housing 111 using a detection result of the transmission-type sensor 117. If the alkali metal-containing material 113 is present in the vicinity of the upper end of the housing 111, then the electrode manufacturing apparatus 1 terminates the process. In this connection, when the alkali metal-containing material 113 is present in the vicinity of the upper end of the housing 111, there are sufficient alkali metal-containing materials 113 in the housing 111, and thus it is unnecessary to supply a new alkali metal-containing material 113.

If the alkali metal-containing material 113 is absent in the vicinity of the upper end of the housing 111, the electrode manufacturing apparatus 1 moves the shutter 125 to open the opening 127. Then, the supply unit 121 supplies a new alkali metal-containing material 113 into the housing 111. When the alkali metal-containing material 113 is absent in the vicinity of the upper end of the housing 111, the alkali metal-containing materials 113 in the housing 111 have been consumed and the alkali metal-containing materials 113 have decreased.

Even while supplying a new alkali metal-containing material 113, the electrode manufacturing apparatus 1 determines, at specified intervals, whether or not the alkali metal-containing material 113 is present in the vicinity of the upper end of the housing 111 using the detection result of the transmission-type sensor 117. When the alkali metal-containing material 113 becomes present in the vicinity of the upper end of the housing 111 as a result of supplying a new alkali metal-containing material 113, the electrode manufacturing apparatus 1 closes the opening 127 with the shutter 125.

The electrode manufacturing apparatus 1 may perform the aforementioned process, for example, using a microcomputer. Alternatively, an operator may move the shutter 125 in response to the detection result of the transmission-type sensor 117.

### 3. Effects Achieved by Electrode Manufacturing Apparatus 1

According to the fifth embodiment detailed above, the following effects are achieved.
(5A) The counter electrode unit 51 comprises the housing 111 to house the rod-shaped alkali metal-containing materials 113. When the alkali metal-containing materials 113 in the housing 111 decrease, the electrode manufacturing apparatus 1 can supply a new alkali metal-containing material 113 into the housing 111. Thus, replenishing operation of the alkali metal-containing materials 113 to the counter electrode unit 51 is facilitated.
(5B) The electrode manufacturing apparatus 1 comprises the supply unit 121. Thus, replenishing operation of the alkali metal-containing materials 113 to the counter electrode unit 51 is further facilitated.
(5C) The electrode manufacturing apparatus 1 can determine whether or not the alkali metal-containing material 113 is present in the vicinity of the upper end of the housing 111 using the transmission-type sensor 117. Thus, the electrode manufacturing apparatus 1 can easily detect a quantity of the alkali metal-containing materials 113 in the housing 111. The electrode manufacturing apparatus 1 can replenish the alkali metal-containing materials 113 to the counter electrode unit 51 based on the detection result of the transmission-type sensor 117.
(5D) The electrode manufacturing apparatus 1 comprises the anode bag 115. The anode bag 115 covers the outside of the housing 111. The holes provided in the anode bag 115 are smaller than the holes provided in the housing 111. Thus, it is possible to reduce outflow of alkali metal powder resulting from the alkali metal-containing materials 113 from the counter electrode unit 51.
(5E) The housing 111 can electrically connect the alkali metal-containing materials 113 with the cable 89.

### <Other Embodiments>

Although some embodiments of the present disclosure have been described as above, the present disclosure is not limited to the above-described embodiments, but may be practiced in various modified forms.
(1) In the first embodiment, the thickness of the conductive base material 77 may be constant at any position. In this case, by tilting the conductive base material 77, it may be configured such that the distance between the measurement position MP2 and the electrode precursor 73 becomes greater as the measurement position MP2 becomes closer to the connection position CP.
(2) In the fourth embodiment, the alkali metal-containing plate 79 and the metal foil 77C may be formed as an integrated member.
(3) A function served by a single element in any of the above-described embodiments may be achieved by a plurality of elements, or a function served by a plurality of elements may be achieved by a single element. Also, a part of a configuration in any of the above-described embodiments may be omitted. Further, at least a part of a configuration in any of the above-described embodiments may be added to, or replace, a configuration in another of the embodiments. Any form within the technical idea that is defined by the wording of the claims is an embodiment of the present disclosure.
(4) In addition to the electrode manufacturing apparatus described above, the present disclosure may be implemented in various forms, such as a system that comprises the electrode manufacturing apparatus as an element and an electrode manufacturing method.

## Claims

1. An electrode manufacturing apparatus for doping an active material in a strip-shaped electrode precursor having a layer including the active material with alkali metal, the apparatus comprising:
a doping bath configured to store a solution comprising alkali metal ions;
a conveyor unit configured to convey the electrode precursor along a path passing through the doping bath;
a counter electrode unit housed in the doping bath and comprising a conductive base material and an alkali metal-containing plate arranged on the conductive base material; and
a connection unit configured to electrically connect the electrode precursor and the counter electrode unit,
wherein a distance between the alkali metal-containing plate and the electrode precursor becomes greater as a measurement position of the distance becomes closer to a connection position in which the electrode precursor and the connection unit connect each other.

2. An electrode manufacturing apparatus for doping an active material in a strip-shaped electrode precursor having a layer including the active material with alkali metal, the apparatus comprising:
a doping bath configured to store a solution comprising alkali metal ions;
a conveyor unit configured to convey the electrode precursor along a path passing through the doping bath;
a counter electrode unit housed in the doping bath and comprising a conductive base material and an alkali metal-containing plate arranged on the conductive base material; and
a connection unit configured to electrically connect the electrode precursor and the counter electrode unit,
wherein a thickness of the alkali metal-containing plate becomes greater as a measurement position of the thickness becomes closer to a connection position in which the electrode precursor and the connection unit connect each other.

3. An electrode manufacturing apparatus for doping an active material in a strip-shaped electrode precursor having a layer including the active material with alkali metal, the apparatus comprising:
a doping bath configured to store a solution comprising alkali metal ions;
a conveyor unit configured to convey the electrode precursor along a path passing through the doping bath;
a counter electrode unit housed in the doping bath and comprising a conductive base material and an alkali metal-containing plate arranged on the conductive base material; and
a connection unit configured to electrically connect the electrode precursor and the counter electrode unit,
wherein the conductive base material comprises holes in a surface thereof facing the alkali metal-containing plate.

4. The electrode manufacturing apparatus according to any one of claims 1 to 3,
wherein the conveyor unit comprises an electrically conductive conveyor roller as a part of the connection unit, and
wherein the connection position is a position in which the electrode precursor and the electrically conductive conveyor roller connect each other.

5. The electrode manufacturing apparatus according to any one of claims 1 to 4,
wherein the electrode manufacturing apparatus comprises a plurality of the alkali metal-containing plates that are arranged to face each other with the electrode precursor located therebetween.

6. An electrode manufacturing apparatus for doping an active material in a strip-shaped electrode precursor having a layer including the active material with alkali metal, the apparatus comprising:
a doping bath configured to store a solution comprising alkali metal ions;
a conveyor unit configured to convey the electrode precursor along a path passing through the doping bath;
a counter electrode unit housed in the doping bath; and
a connection unit configured to electrically connect the electrode precursor and the counter electrode unit,
wherein the counter electrode unit comprises a housing that houses a rod-shaped alkali metal-containing material and allows penetration of the solution.
